(19) Europäisches Patentamt
European Patent Office
Office européen des brevets

(11) **EP 2 820 110 B1**

(12) **EUROPEAN PATENT SPECIFICATION**

(45) Date of publication and mention
of the grant of the patent:
**03.04.2019 Bulletin 2019/14**

(21) Application number: **13701521.0**

(22) Date of filing: **10.01.2013**

(51) Int Cl.:
*C10G 75/02* (2006.01)    *C10G 7/10* (2006.01)

(86) International application number:
**PCT/US2013/020967**

(87) International publication number:
**WO 2013/130182 (06.09.2013 Gazette 2013/36)**

(54) **STEAM GENERATOR ADDITIVES TO MINIMIZE FOULING AND CORROSION IN CRUDE TOWERS**

DAMPFERZEUGERADDITIVE ZUR MINIMIERUNG VON VERSCHMUTZUNG UND KORROSION IN ROHÖLTÜRMEN

ADDITIFS POUR CHAUDIÈRE À VAPEUR POUR RÉDUIRE À UN MINIMUM L'ENCRASSEMENT ET LA CORROSION DANS DES TOURS DE DISTILLATION DE BRUT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.02.2012 US 201261604002 P**

(43) Date of publication of application:
**07.01.2015 Bulletin 2015/02**

(73) Proprietor: **BL Technologies, Inc.**
**Minnetonka, MN 55341 (US)**

(72) Inventor: **DALE, Trevor James**
**Trevose, Pennsylvania 19053 (US)**

(74) Representative: **Fonquernie, Sophie Benedicte et al**
**Marks & Clerk France**
**Immeuble Visium**
**22, avenue Aristide Briand**
**94117 Arcueil Cedex (FR)**

(56) References cited:
**GB-A- 1 198 734        US-A- 5 211 840**
**US-A1- 2006 043 340**

**Description**

CROSS REFERENCE TO RELATED APPLICATION

The present application claims priority under 35 USC §119(e) to U.S. Provisional Patent Application Serial No. 61/604,002 filed February 28, 2012 and entitled "Steam Generator Additives to Minimize Fouling and Corrosion in Crude Towers".

BACKGROUND

Steam generators are used to provide steam to a variety of industrial processes. In the petroleum refining industry, steam is provided to the fractional distillation tower as a stripping medium to fractionate crude oil into various cuts or fractions of different volatility including gasoline, fuel oil, gas oil, naphtha, kerosene, and others. When it is introduced, it reduces the partial pressure of the hydrocarbon compounds in the crude to facilitate the separation and removal of volatile compounds. The steam helps separate the lighter products which then rise upwards in the tower where they condense on horizontally disposed trays. These trays are increasingly cooler higher in the towers. Thus, the heaviest hydrocarbons are collected on the lower trays while the lighter products collect on the higher trays.

The lower boiling fractions are recovered as an overhead fraction from the distillation zones. The intermediate components are recovered as side cuts from the distillation zones. The fractions are cooled, condensed, and sent to collecting equipment. No matter what type of petroleum feedstock is used as the charge, the distillation equipment is subjected to the corrosive activity of acids such as $H_2S$, HCl, organic acids and $H_2CO_3$.

Corrosion may occur on the metal surfaces of petroleum distillation equipment such as crude towers, trays within the towers, heat exchangers, etc. The most troublesome locations for corrosion are tower top trays, overhead lines, condensers, and top pump around exchangers. Temperature decreases moving up the tower into the overhead system and it is usually within these areas that temperature falls below the water dewpoint temperature and initial water condensation occurs. This aqueous initial condensate formed contains a significant concentration of the acidic components mentioned above and this high concentration renders the pH of the condensate highly acidic and, of course, dangerously corrosive. Ideally, the top temperature of the fractionating column is maintained above the water dewpoint to mitigate this issue. There is, however, a market trend to reduce the tower top temperature to maximize profitability for the refinery. Unfortunately, this moves the initial condensate site upstream in the process toward the tower from the overhead condensers and can even drive it into the tower top area. Accordingly, neutralizing treatments have been used to render the pH of the condensate more alkaline to thereby minimize acid-based corrosive attack at those apparatus regions with which this condensate is in contact.

In the past, a variety of neutralizers has been fed to the distillation tower in order to neutralize the corrosive acids found in the crude charge or formed in the distillation process. Ammonia has been used extensively but is generally ineffective for initial condensate corrosion inhibition, in part due to its high volatility and therefore inability to condense at the initial condensation site and neutralize the acidic species formed. Additionally, upon neutralization of hydrochloric acid, ammonia forms ammonium chloride which can precipitate and foul distillation units leading to significant metal wastage. The use of organic amines to neutralize initial condensation sites has proven superior to ammonia but caution must be taken in selection of these amines as they also suffer limitations.

One significant limitation to the use of highly basic organic amines to neutralize these corrosive acids is fouling and related corrosion induced by the formation of amine hydrochloride salts. As with ammonia, upon neutralization of HCl with organic amines, the produced amine hydrochloride salts may form deposits on the internal surfaces of the distillation system, potentially upstream of the water dewpoint, in the worst case in the top trays of the tower. These fouling deposits have the potential to generate incredibly high corrosion rates due to their acidic nature and potential to cause underdeposit corrosion. Desirably, if formed, these salts remain volatile as they pass through and out of the tower. If the salts precipitate at all, it is desirable that they do so only downstream of the tower and below the water dewpoint to allow the precipitating salt species to be washed away by condensate water and/or wash water systems commonly employed in conjunction with condenser feed and return lines.

The problems associated with amine hydrochloride salt deposition are outlined in U.S. Patent No. 5,211,840, which teaches that amine salt deposition can be avoided using less basic amines. The inventors of U.S. Patent No. 5,211,840 discovered that in general, the salts of less basic amines form at lower temperatures relative to highly basic amines, temperatures not often observed inside a distillation tower but rather lower temperatures found downstream of the tower. Reference is also made to US 2006/04330 A1, which also discusses the problems associated with amine hydrochloride salt deposition.

Industrial steam generation systems are also prone to corrosive attack. One of the most common corrosive concerns is that of acid attack related to the formation of carbonic acid, $H_2CO_3$, in the water. Acid attack can occur when the pH of the water drops below about 8.5. At that point, the carbonate alkalinity in the water is converted to $CO_2$ gas.

The $CO_2$ is carried with the steam and, upon condensation, dissolves in the water to form carbonic acid, $H_2CO_3$. Such acid attack may adversely affect condensate piping.

Neutralizing amines can be used to provide corrosion protection in steam generation systems. Neutralizing amines for steam generators are ideally highly basic and are commonly fed to the steam generator feedwater or directly to the steam drum to neutralize acidic species that may form in the condensate. In order to provide effective condensate protection, amines that are fed to the steam generator feedwater require a sufficient volatility in the steam generating system, that is to say that they must partition to the steam phase in order to provide corrosion protection throughout the entire system. Unfortunately, these highly basic amines may contribute to fouling and related corrosion induced by the formation of amine hydrochloride salts in hydrocarbon processing equipment.

Accordingly, in those petroleum refinery operations in which generated steam is used as a stripping medium to facilitate hydrocarbon separation as mentioned above, it would be beneficial to provide a novel amine treatment that could be supplied to the steam generator to provide effective corrosion protection in the steam generator as a highly basic neutralizing amine while carrying over with the generated steam that is used as a stripping medium for the hydrocarbon distillation column. Ideally, when this amine in the stripping medium neutralizes acidity in the distillation tower, it remains in the vapor phase and does not precipitate as an amine salt in the distillation unit. Rather, the amine salt, such as the amine HCl salt, precipitates at a temperature low enough to be downstream in the process in the overhead condensate lines proximal to or downstream from the water dewpoint. These lines can be subjected to a water wash operation so that any salts precipitating in these lines could be readily washed away from the metallic piping surfaces. Thus, the use of an ideal amine treatment in the steam generator minimizes fouling in the hydrocarbon processing equipment.

BRIEF DESCRIPTION

In one embodiment of the invention, a method is provided for protection of both the steam generator system and the distillation towers of a petroleum or petrochemical refinery from corrosion and fouling, as defined in claim 1.

These "dual action" amines provide both corrosion protection for the steam generator system and the added benefit of minimizing fouling deposits inside the distillation tower. When these amines reach the distillation tower with the steam, they do not precipitate and foul inside the tower, rather they are pushed to the lower temperature sections of the crude overhead system where their corrosive impact can be minimized by other corrosion inhibition strategies.

BRIEF DESCRIPTION OF THE DRAWINGS

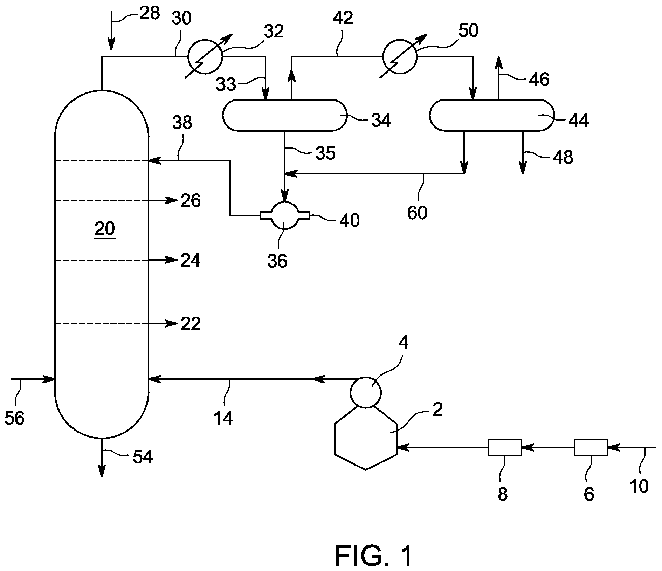

The attached Figure 1 is a simplified process flow diagram of a typical steam fed crude oil fractional distillation unit.

DETAILED DESCRIPTION

As shown in Figure 1, crude fractional distillation tower 20 distills the crude entering the tower through charge line 56 into various fractions of different boiling ranges. The crude fractional distillation tower is sometimes referred to as an atmospheric distillation unit because it operates at slightly above atmospheric pressure.

It is noted that the crude admitted to the tower is typically subjected to preheating and desalting operations upstream from the charge line 56, but these are omitted herein for the sake of brevity. The crude is distilled into a plurality of fractions in the tower 20, with side cuts 22, 24, and 26 shown in the figure representing atmospheric gas oil (AGO), diesel, and jet fuel/kerosene side cut fractions respectively. (The horizontal condensation trays in the tower are shown in phantom).

The crude is typically preheated to about 200-700 °F before it enters the tower. After preheating, the feed is then flashed into the atmospheric distillation unit which operates at pressures of about 1-3 Atmospheres gauge.

In the figure, a two stage condenser unit is shown for the removal of overhead that condenses to form naptha with reflux admitted at the top of the tower. The two stage condenser includes heat exchangers 32, 50 with line 30 leading to heat exchanger 32 and line 33 leading to reflux drum 34. Gases from the drum 34 advance to 50 through line 42. A vacuum is drawn on reflux drum 34 by pump 36 resulting in return of reflux through line 35 to the pump and then through line 38. Naptha collection is shown at 40. Gases from the second stage heat exchanger 50 are advanced to condensate drum 44 with condensate recycled through line 60 to the vacuum pump 36. Noncondensing gases are vented at 46 with sour water exiting at 48 for neutralization or other treatment.

The overhead condensate system may be provided with a water wash, diagrammatically shown at 28, to wash the vapors exiting at the top of the tower. In the past, corrosion problems have been experienced not only on the tower trays but especially in the overhead components of the system such as the lines 30,33,35,42,60, the heat exchangers 32,50, and the reflux and condensate drums. Overall, typical operating temperatures in the overhead condensate system range from about 200 °F to about 350 °F.

Residuum exits from the bottom of the tower through vacuum line 54 and is typically condensed to form fuel oil or coker naptha and/or coker gas oil.

As shown, stripping steam is fed to the bottom of the tower via line 14. The steam is produced in steam generator 2 via conventional processes. For example, steam generator feedwater 10 may be subjected to softening treatment 6 and deaerator 8 prior to entry into the boiler. Steam produced in the boiler is collected in a drum or header 4 and is then fed to the distillation tower 20 via line 14.

In accordance with one embodiment of the invention, a "dual" action neutralizing amine composition is fed to the steam generator and travels to the distillation tower 20 through feed line 14 along with the stripping steam. By "dual action", are denoted those organic amines which function to perform effectively as a volatile neutralizing amine in the steam generator while, after being fed with the steam to the tower, persist in the tower in vapor phase and minimize fouling caused by amine salt deposits. Deleterious amine salts of the steam neutralizing amine, such as amine HCl salts, do not precipitate in the tower with injection of these amines into the unit 20. Precipitation of such amine salts such as the amine HCl salt will occur, if at all, only downstream in the overhead condensation units and related lines which operate at temperatures proximate the water dewpoint. Elimination of the potential for the deposition of these salts allows the tower operator to maintain the tower top at a lower temperature which offers operational flexibility and the ability to maximize refinery profitability.

In one exemplary embodiment, the dual action amine composition comprises N,N-dimethylethanolamine (DMAE). Another exemplary dual action amine is morpholine (MORPH).

In another exemplary embodiment, the "dual" action amine composition may comprise one or more of members of the group selected from DMAE, MORPH, N-hexylamine, N,N-dimethylcyclohexylamine, 1-Dimethylamino-2-propanol, t-butylmorpholine, Dimethyl-t-butanolamine, N-ethylmorpholine, N,N-dimethylmethoxypropylamine, N-methylmorpholine, N, N-Dimethylmethoxyethylamine, methoxypropylamine, trimethylamine, cyclohexylamine, 1-methylpyrrolidine, 1,4-dimethylpiperazine, N,N,N',N'-tetramethylethylenediamine, 2-Aminomethylfuran, 1,2-Dimethylpropylamine, N-Methyldibutylamine, N-Methyldipropylamine, 2-Ethyl-1-hexylamine, N,N-Diethyl-propargylamine, N,N-dipropylamine, diallyl amine, pyrrolidine, 2-(methylamino)-ethanol, N,N,N',N'-tetramethyl-1,3-propane diamine, 4-methylpyridine, and N-methyl-2-aminomethylfuran. The dual action amine composition may comprise two amines, and in such a case, the ratio of one amine to the other may be about 1:20 to about 20:1. Thus, if DMAE is utilized in combination with another dual action amine, such as morpholine or cyclohexylamine, the ratio of DMAE to morpholine or cyclohexylamine would be about 1:20 to about 20:1.

Although applicant is not to be bound to any particular theory of operation, the overall performance of a given amine as a "dual action" amine may be predicted upon assessment of several factors. As the amine must provide alkalization at initial condensate sites, the distribution ratio (DR), a measure of the distribution of a chemical between the steam phase and liquid phase inside the steam generator, should be about 4.0 or less, such as about 1.0 to about 4.0 or about 1.0 to about 3.0. To ensure alkalization of highly acidic species, the pKa of the amine should be chosen to be in the range of about 7.0 to about 11.0. Present data indicates that a more preferred range is about 9.0 to about 11.0. Additionally, to ensure minimization of amine HCl salt fouling, the salt volatility index should be about 2.5 or less such as 0.001 to 2.5 or 0.01 to 2. This amine HCl salt volatility index may be calculated from the formula:

$$\frac{\dfrac{P_{225}(NH_4Cl)}{P_{225}(Amine \cdot Cl)} + \dfrac{P_{300}(NH_4Cl)}{P_{300}(Amine \cdot HCl)}}{2}$$

wherein P is the vapor pressure at either 225 °F or 300 °F. In general, it can be said then that the "dual action" amines are defined by a DR about 4.0 or less, a pKa of about 7.0 to about 11.0, and an amine salt volatility index of about 2.5 or less. However, while N,N-dimethylaminopropylamine (DMAPA) possesses such DR, pKa, and volatility index characteristics, preliminary data suggest that the diamino functionality of DMAPA does not perform well as a "dual action" amine, and thus DMAPA is not to be deemed a part of the invention and is not to be considered as a "dual action" amine.

The artisan will appreciate that the "dual action" amines may be used in combination with other "dual action" amines.

Further, the "dual action" amines may be conjointly used in combination with other steam generator treatments such as oxygen scavengers, dispersants, alkalizing agents, polymers, filming agents, corrosion inhibitors, deposit control agents, etc. The oxygen scavenger may be N,N-diethylhydroxylamine. The filming agent may be N-octadecylamine, N-oleylpropanediamine, N-oleylamine, or mixtures thereof. The oxygen scavenger may be fed to the boiler system in an amount of about 0.05 to 25 ppm based on one million parts of water in the steam generator system, such as 0.1 to 20 ppm. The filming agent may be fed to the boiler system in an amount of about 0.05 to 25 ppm based on one million parts of water in the steam generator system, such as 0.1 to 20 ppm.

The present description is also directed to a formulation containing one or more dual action amines, preferably two dual action amines, and may comprise one, two, or more of members of the group selected from DMAE, MORPH, N-hexylamine, N,N-dimethylcyclohexylamine, 1-Dimethylamino-2-propanol, t-butylmorpholine, Dimethyl-t-butanolamine, N-ethylmorpholine, N,N-dimethylmethoxypropylamine, N-methylmorpholine, N, N-Dimethylmethoxyethylamine, methoxypropylamine, trimethylamine, cyclohexylamine, 1-methylpyrrolidine, 1,4-dimethylpiperazine, N,N,N',N'-tetramethylethylenediamine, 2-Aminomethylfuran, 1,2-Dimethylpropylamine, N-Methyldibutylamine, N-Methyldipropylamine, 2-Ethyl-1-hexylamine, N,N-Diethyl-propargylamine, N,N-dipropylamine, diallyl amine, pyrrolidine, 2-(methylamino)-ethanol, N,N,N',N'-tetramethyl-1,3-propane diamine, 4-methylpyridine, and N-methyl-2-aminomethylfuran. The dual action amine composition may comprise two amines, and in such a case, the ratio of one amine to the other may be about 1:20 to about 20:1. Thus, if DMAE is utilized in combination with another dual action amine, such as methoxypropylamine or cyclohexylamine, the ratio of DMAE to cyclohexylamine or methoxypropylamine would be about 1:20 to about 20:1. The composition can also contain other steam generator treatments such as oxygen scavengers, dispersants, alkalizing agents, polymers, filming agents, corrosion inhibitors, deposit control agents, etc. The oxygen scavenger may be N,N-diethylhydroxylamine. The filming agent may be N-octadecylamine, N-oleylpropanediamine, N-oleylamine, or mixtures thereof. The composition may contain 0.1 to 100 parts of dual action amines (in the aggregate), such as 1-50 parts, and 5-50 parts. The composition may also contain 0.05 to 25 parts of oxygen scavenger, such as 0.1 to 20 parts. The composition may contain 0.05 to 25 parts of the filming agent, such as 0.1 to 20 parts. The formulation may also contain water. The amount of water can be 0-90% of the formulation, preferably 5-75%. It is noted that the "parts" do not need to add up to 100 and are merely utilized to denote the relative amounts of the dual action amines, oxygen scavenger, and filming agent. The composition can contain two dual action amines, including one being DMAE and another dual action amine where the ratio of DMAE to the other dual action amine is 1:20 to 20:1. The composition can also contain the filming amine where the ratio of DMAE to the filming amine is 1:1 to 100:1. The composition can also contain the oxygen scavenger where the ratio of DMAE to the oxygen scavenger is 10:1 to 1:10.

The dual action amine, as well as one or more of the oxygen scavengers, dispersants, alkalizing agents, polymers, filming agents, corrosion inhibitors, deposit control agents, etc. can be fed to the steam generator in any one or more locations such as to the steam generator feedwater, in the economizer section, in a system deaerator, in the condensate system, or to the steam header or drum. A sufficient amount of the dual action amine should be fed to the steam generator so that the amine can provide its intended function as a neutralizing amine in the boiler and condensate system while remaining volatile in the steam fed to the crude distillation tower. Typically, the volatility of amines in a steam system decreases above a boiler operating pressure of about 900 psig (62.1 barg); therefore, the dual action amines are intended for use below this operating pressure, such as a pressure from about 300 to about 750 psig (20.7 to 51.7 barg). The dual action amine composition can be fed to the system in an amount of about 0.1 to 100 ppm based on one million parts of water in the steam generator system. More preferably, the feed rate may be from 1 to 50 ppm based on one million parts of water in the system, such as 5 to 50 ppm. The ranges provided herein reflect the aggregate amounts of dual action amines used. Thus, if dimethylaminoethanol and morpholine were both used, the combined amount of both amines in the aggregate would be 0.1 to 100 ppm relative to the water.

EXAMPLES

The following example is only intended to further illustrate the described invention and is not to be considered as limiting its scope.

Operating conditions for a typical refinery were used to calculate amine salt dewpoints for some conventional neutralizing amines and for examples of amines according to the present invention. The acid used was HCl, the dominant acidic species present in a petroleum distillation unit. Calculations were based upon equivalent parts of amine and hydrochloride and the results are shown in Table 1.

Table 1: Common neutralizing amine hydrochloride salt properties. The pKa and hydrochloride salt properties were used to calculate amine hydrochloride initial salt dewpoints based on the following conditions: overhead pressure = 10.0 psig; chloride concentration = 40 ppm; tower top temperature = 250 °F.

| Amine Chloride Salt | Amine HCl salt volatility index | pKa | Initial Salt Dewpoint |
|---|---|---|---|
| Ethylenediamine HCl | 146 | 10,7 | 300 |

(continued)

| Amine Chloride Salt | Amine HCl salt volatility index | pKa | Initial Salt Dewpoint |
|---|---|---|---|
| Ethanolamine HCl | 6.4 | 9.5 | 251 |
| *Water dewpoint* | N/A | N/A | 208 |
| N,N-dimethylaminoethanol HCl | 2.0 | 9.3 | 202 |
| morpholine HCl | 1.3 | 8.3 | 183 |
| N-methylmorpholine HCl | 0.18 | 7.1 | 143 |

As is clear from the data tabulated in Table 1, a desired predicted initial salt dewpoint below both the tower top temperature and the water dewpoint can be achieved with selected amines described in this invention.

**Claims**

1. A method of inhibiting fouling and corrosion in a refinery distillation tower of the type wherein crude oil is injected into the tower for fractional distillation of a plurality of fractions of said crude oil and wherein steam from a steam generator is used as stripping medium in the tower, the improved method comprising feeding a dual action amine composition into said steam generator and carrying said dual action amine in vapor form to said tower, wherein a dual action amine in said composition has a distribution ratio (DR), being the distribution of a chemical between the steam phase and liquid phase inside the steam generator, of 4.0 or less, a pKa of 7.0 to 11.0 and an amine HCl salt volatility index of 2.5 or less, wherein the amine HCl salt volatility index is calculated from the formula:

$$\frac{\dfrac{P_{225}(NH_4Cl)}{P_{225}(Amine \cdot Cl)} + \dfrac{P_{300}(NH_4Cl)}{P_{300}(Amine \cdot HCl)}}{2}$$

where P is the vapor pressure at either 107.2 Centigrade (225 °F) or 148.9 Centigrade (300 °F) and wherein the dual action amine composition does not comprise N,N-dimethylaminopropylamine (DMAPA).

2. A method as recited in claim 1 wherein said dual action amine composition is fed to said steam generator system in an amount of 0.1 to 100 ppm based on 1 million parts of water in said steam generator system.

3. A method as recited in any of claims 1 to 2, wherein said dual action amine in said composition has a DR of 1.0 to 4.0 and a pKa of 9.0 to 11.0, and a volatility index of 0.001 to 2.5.

4. A method as recited in claim 1 wherein said dual action amine composition comprises N,N-dimethylaminoethanol, morpholine, N-hexylamine, N,N-dimethylcyclohexylamine, 1 -Dimethylamino-2-propanol, t-butylmorpholine, Dimethyl-t-butanolamine, N-ethylmorpholine, N,N-dimethylmethoxypropylamine, methoxypropylamine, N-methylmorpholine, N,N-Dimethylmethoxyethylamine, trimethylamine, cyclohexylamine, 1-methylpyrrolidine, 1,4-dimethylpiperazine, N,N,N',N'-tetramethylethylenediamine, 2-Aminomethylfuran, 1,2-Dimethylpropylamine, N-Methyldibutylamine, N-Methyldipropylamine, 2-Ethyl-1-hexylamine, N,N-Diethyl-propargylamine, N,N-dipropylamine, diallyl amine, pyrrolidine, 2-(methylamino)-ethanol, N,N,N',N'-tetramethyl-1,3-propane diamine, 4-methylpyridine, N-methyl-2-aminomethylfuran, or mixtures thereof.

5. A method as recited in claim 1 wherein said dual action amine composition additionally comprises at least one component selected from the group consisting of: oxygen scavengers, dispersants, alkalizining agents, polymers, filming agents, corrosion inhibitors, and deposit control agents.

6. The method as recited in claim 5 wherein said oxygen scavenger is N,N-diethylhydroxylamine.

7. The method as recited in claim 5 wherein said filming agent is N-octadecylamine, N-oleylpropanediamine, N-oleylamine, or mixtures thereof.

8. The method as recited in claim 5 wherein said filming agent is N-oleylpropanediamine.

9. The method as recited in claim 7, wherein said filming agent is fed to said steam generator system in an amount of 0.05 to 25 ppm based on 1 million parts of water in said steam generator system.

10. The method as recited in claim 6, wherein said oxygen scavenger is fed to said steam generator system in an amount of 0.05 to 25 ppm based on 1 million parts of water in said steam generator system.

11. A method as recited in claim 1, wherein said steam generator operates at a pressure below 62.1 Bar (900 psig).

12. A method of inhibiting fouling and corrosion in a refinery distillation tower and steam generator as recited in claim 1, wherein said steam generator is adapted to feed steam to said tower, wherein said dual action amine composition comprises N,N-dimethylaminoethanol and at least one other dual action amine, and carrying said dual action amine composition in vapor phase from said steam generator to entry into said tower, and carrying said dual action amine along said tower in vapor phase, whereby said dual action amine aids in neutralizing acidic components in said steam generator and serves to minimize fouling caused by salt deposits of amines in the tower.

**Patentansprüche**

1. Verfahren zum Hemmen von Fouling und Korrosion in einem Raffinerie-Destillationsturm des Typs, in dem Rohöl für die fraktionierte Destillation einer Mehrzahl von Fraktionen des Rohöls in den Turm zugeführt wird und wobei in dem Turm Dampf aus einem Dampfgenerator als Medium zum Abstrippen verwendet wird, wobei das verbesserte Verfahren Einspeisen einer Amin-Zusammensetzung mit Zweifachwirkung in den Dampfgenerator sowie Befördern des Amins mit Zweifachwirkung in Dampfform in dem Turm umfasst, wobei ein Amin mit Zweifachwirkung in der Zusammensetzung einen Verteilungskoeffizienten (DR), der die Verteilung einer chemischen Substanz zwischen der Dampfphase und Flüssigphase im Inneren des Dampfgenerators ist, von 4,0 oder weniger, einen pKa von 7,0 bis 11,0 und einen Flüchtigkeitsindex von Amin-HCl-Salz von 2,5 oder weniger aufweist, wobei der Flüchtigkeitsindex von Amin-HCl-Salz berechnet wird aus der Formel:

$$\frac{P_{225}\,(NH_4Cl)}{P_{225}\,(Amine \cdot Cl)} \; + \; \frac{P_{300}\,(NH_4Cl)}{P_{300}\,(Amine \cdot HCl)}$$
$$2$$

worin P der Dampfdruck entweder bei 107,2 °C (225 °F) oder 148,9 °C (300 °F) beträgt und wobei die Amin-Zusammensetzung mit Zweifachwirkung kein N,N-Dimethylaminopropylamin (DMAPA) umfasst.

2. Verfahren nach Anspruch 1, wobei die Amin-Zusammensetzung mit Zweifachwirkung dem Dampfgeneratorsystem, bezogen auf 1 Millionen Teile Wasser in dem Dampfgeneratorsystem, in einer Menge von 0,1 bis 100 ppm zugeführt wird.

3. Verfahren nach einem der Ansprüche 1 bis 2, wobei das Amin mit Zweifachwirkung in der Zusammensetzung einen DR von 1,0 bis 4,0 und einen pKa von 9,0 bis 11,0 und einen Flüchtigkeitsindex von 0,001 bis 2,5 aufweist.

4. Verfahren nach Anspruch 1, wobei die Amin-Zusammensetzung mit Zweifachwirkung umfasst: N,N-Dimethylaminoethanol, Morpholin, N-Hexylamin, N,N-Dimethylcyclohexylamin, 1-Dimethylamino-2-propanol, t-Butylmorpholin, Dimethyl-t-butanolamin, N-Ethylmorpholin, N,N-Dimethylmethoxypropylamin, Methoxypropylamin, N-Methylmorpholin, N,N-Dimethylmethoxyethylamin, Trimethylamin, Cyclohexylamin, 1-Methylpyrrolidin, 1,4-Dimethylpiperazin, N,N,N',N'-Tetramethylethylendiamin, 2-Aminomethylfuran, 1,2-Dimethylpropylamin, N-Methyldibutylamin, N-Methyldipropylamin, 2-Ethyl-1-Hexylamin, N,N-Diethyl-propargylamin, N,N-Dipropylamin, Diallylamin, Pyrrolidin, 2-(Methylamino)-ethanol, N,N,N',N'-Tetramethyl-1,3-propandiamin, 4-Methylpyridin, N-Methyl-2-aminomethylfuran, oder Mischungen davon.

**5.** Verfahren nach Anspruch 1, wobei die Amin-Zusammensetzung mit Zweifachwirkung zusätzlich mindestens eine Komponente umfasst, die ausgewählt ist aus der Gruppe, bestehend aus: Sauerstoffaufnehmern, Dispergiermitteln, Mitteln zum Alkalisieren, Polymeren, filmbildenden Mitteln, Korrosionsinhibitoren und Abscheidungsschutzmitteln.

**6.** Verfahren nach Anspruch 5, wobei der Sauerstoffaufnehmer N,N-Diethylhydroxylamin ist.

**7.** Verfahren nach Anspruch 5, wobei das filmbildende Mittel N-Octadecylamin, N-Oleylpropandiamin, N-Oleylamin oder Mischungen davon ist.

**8.** Verfahren nach Anspruch 5, wobei das filmbildende Mittel N-Oleylpropandiamin ist.

**9.** Verfahren nach Anspruch 7, wobei das filmbildende Mittel dem Dampfgeneratorsystem, bezogen auf 1 Millionen Teile Wasser in dem Dampfgeneratorsystem, in einer Menge von 0,05 bis 0,25 ppm zugeführt wird.

**10.** Verfahren nach Anspruch 6, wobei der Sauerstoffaufnehmer dem Dampfgeneratorsystem, bezogen auf 1 Millionen Teile Wasser in dem Dampfgeneratorsystem, in einer Menge von 0,05 bis 0,25 ppm zugeführt wird.

**11.** Verfahren nach Anspruch 1, wobei der Dampfgenerator bei einem Druck unterhalb von 62,1 Bar (900 psig) arbeitet.

**12.** Verfahren zum Hemmen des Foulings und der Korrosion in einem Raffinerie-Destillationsturm und Dampfgenerator nach Anspruch 1, wobei der Dampfgenerator ausgelegt ist, dem Turm Dampf zuzuführen, wobei die Amin-Zusammensetzung mit Zweifachwirkung N,N-Dimethylaminoethanol und mindestens ein anderes Amin mit Zweifachwirkung umfasst, und die Amin-Zusammensetzung mit Zweifachwirkung in Dampfphase aus dem Dampfgenerator zu dem Eintritt in den Turm befördert wird und das Amin mit Zweifachwirkung durch den Turm in Dampfphase befördert wird, wodurch das Amin mit Zweifachwirkung dazu beiträgt, saure Komponenten in dem Dampfgenerator zu neutralisieren und dazu dient, ein Fouling in dem Turm, das durch Salzabscheidungen von Aminen hervorgerufen wird, auf ein Minimum herabzusetzen.

**Revendications**

**1.** Procédé d'inhibition de l'encrassement et de la corrosion dans une tour de distillation de raffinerie du type dans lequel du pétrole brut est injecté dans la tour pour la distillation fractionnée d'une pluralité de fractions dudit pétrole brut et dans lequel de la vapeur d'un générateur de vapeur est utilisée en tant que milieu d'épuration dans la tour, le procédé amélioré comprenant l'alimentation d'une composition d'amine double action dans ledit générateur de vapeur et le transport de ladite amine double action sous forme de vapeur à ladite tour, dans lequel une amine double action dans ladite composition a un rapport de distribution (DR), qui est la distribution d'un produit chimique entre la phase vapeur et la phase liquide à l'intérieur du générateur de vapeur, de 4,0 ou moins, un pKa de 7,0 à 11,0 et un indice de volatilité d'un sel aminé de HCl de 2,5 ou moins, lequel indice de volatilité d'un sel aminé de HCl est calculé à partir de la formule:

$$\frac{P_{225}\,(NH_4Cl)}{P_{225}\,(Amine\cdot Cl)} + \frac{P_{300}\,(NH_4Cl)}{P_{300}\,(Amine\cdot HCl)}$$

$$2$$

où P est la pression de vapeur soit à 107,2 centigrades (225°F) soit à 148,9 centigrades (300°F) et dans lequel la composition d'amine double action ne comprend pas de N,N-diméthylaminopropylamine (DMAPA).

**2.** Procédé selon la revendication 1, dans lequel ladite composition d'amine double action est alimentée audit système générateur de vapeur en une quantité de 0,1 à 100ppm sur la base de 1 million de parties d'eau dans ledit système générateur de vapeur.

**3.** Procédé selon l'une quelconque des revendications 1 à 2, dans lequel ladite amine double action dans ladite composition a un DR de 1,0 à 4,0 et un pKa de 9,0 à 11,0, et un indice de volatilité de 0,001 à 2,5.

**4.** Procédé selon la revendication 1, dans lequel ladite composition d'amine double action comprend du N,N-diméthylaminoéthanol, de la morpholine, de la N-hexylamine, de la N,N-diméthylcyclohexylamine, du 1-diméthylamino-2-propanol, de la t-butylmorpholine, de la diméthyl-t-butanolamine, de la N-éthylmorpholine, de la N,N-diméthylméthoxypropylamine, de la méthoxypropylamine, de la N-méthylmorpholine, de la N,N-diméthylméthoxyéthylamine, de la triméthylamine, de la cyclohexylamine, de la 1-méthylpyrrolidine, de la 1,4-diméthylpipérazine, de la N,N,N',N'-tétraméthyléthylènediamine, du 2-aminométhylfuranne, de la 1,2-diméthylpropylamine, de la N-méthyldibutylamine, de la N-méthyldipropylamine, de la 2-éthyl-1-hexylamine, de la N,N-diéthyl-propargylamine, de la N,N-dipropylamine, de la diallylamine, de la pyrrolidine, du 2-(méthylamino)-éthanol, de la N,N,N',N'-tétraméthyl-1,3-propane diamine, de la 4-méthylpyridine, du N-méthyl-2-aminométhylfuranne ou des mélanges de ceux-ci.

**5.** Procédé selon la revendication 1, dans lequel ladite composition d'amine double action comprend de plus au moins un constituant choisi dans le groupe constitué par: les absorbeurs d'oxygène, les dispersants, les agents alcalinisants, les polymères, les agents filmogènes, les inhibiteurs de corrosion et les agents antidépôt.

**6.** Procédé selon la revendication 5, dans lequel ledit absorbeur d'oxygène est la N,N-diéthylhydroxylamine.

**7.** Procédé selon la revendication 5, dans lequel ledit agent filmogène est la N-octadécylamine, la N-oléylpropanediamine, la N-oléylamine ou des mélanges de celles-ci.

**8.** Procédé selon la revendication 5, dans lequel ledit agent filmogène est la N-oléylpropanediamine.

**9.** Procédé selon la revendication 7, dans lequel ledit agent filmogène est alimenté audit système générateur de vapeur en une quantité de 0,05 à 25ppm sur la base de 1 million de parties d'eau dans ledit système générateur de vapeur.

**10.** Procédé selon la revendication 6, dans lequel ledit absorbeur d'oxygène est alimenté audit système générateur de vapeur en une quantité de 0,05 à 25ppm sur la base de 1 million de parties d'eau dans ledit système générateur de vapeur.

**11.** Procédé selon la revendication 1, dans lequel ledit générateur de vapeur fonctionne à une pression inférieure à 62,1 bars (900 psig).

**12.** Procédé d'inhibition de l'encrassement et de la corrosion dans une tour de distillation de raffinerie et un générateur de vapeur selon la revendication 1, dans lequel ledit générateur de vapeur est adapté pour alimenter de la vapeur à ladite tour, dans lequel ladite composition d'amine double action comprend du N,N-diméthylaminoéthanol et au moins une autre amine double action, et ladite composition d'amine double en phase vapeur est véhiculée depuis ledit générateur de vapeur jusqu'à l'entrée dans ladite tour, et ladite amine double action est véhiculée le long de ladite tour en phase vapeur, de sorte que ladite amine double action aide à neutraliser les constituants acides dans ledit générateur de vapeur et sert à minimiser l'encrassement provoqué par les dépôts salins d'amines dans la tour.

FIG. 1

**EP 2 820 110 B1**

**REFERENCES CITED IN THE DESCRIPTION**

**Patent documents cited in the description**

- US 61604002 A
- US 5211840 A
- US 200604330 A1